# EUROPÄISCHE PATENTANMELDUNG

(11) **EP 3 683 174 A1**
(43) Veröffentlichungstag der Anmeldung: **22.07.2020**
(21) Anmeldenummer: 19152265.5
(22) Anmeldetag: 17.01.2019
(51) Int. Cl.: B65G 65/00, B07C 3/00, G05B 19/418

(54) **SORTIERSYSTEM UND VERFAHREN ZUM SORTIEREN VON STÜCKGÜTERN MIT ÜBER- UND UNTERFAHRBAREN FÖRDERMITTELN**

(71) Anmelder: Siemens Aktiengesellschaft, 80333 München (DE)
(72) Erfinder: ENENKEL, Peter, 78462 Konstanz (DE)
(74) Vertreter: Maier, Daniel Oliver

(57) **Zusammenfassung**

Die Erfindung betrifft ein Sortiersystem (2) und ein Verfahren zum Sortieren von Stückgütern (1) auf einer Bewegungsfläche (4). Ein Fördermittel erster Art (6a) und ein Fördermittel zweiter Art (6b), die jeweils ein Fördermittelfahrwerk (16a, 16b) und einen Fördermittellastträger (26a, 26b) aufweisen, sind ansteuerbar entlang einer individuell festlegbaren Strecke verfahrbar und derart aneinander angepasst dimensioniert sind, dass das Fördermittel erster Art (6a) von dem Fördermittel zweiter Art (6b) überfahrbar und/oder dass das Fördermittel zweiter Art (6b) von dem Fördermittel erster Art (6a) unterfahrbar ist. Die Erfindung ermöglicht eine Nutzung derselben Bewegungsfläche (4) über mehrere Ebenen von mehreren Fördermitteln, ohne dass eine Ausbildung mehrerer übereinander liegender Trassen erforderlich ist.

## Beschreibung

Die vorliegende Erfindung betrifft das technische Gebiet der Sortier- und Transportsysteme, insbesondere der fahrerlosen Transportsysteme (FTS) mit fahrerlosen Transportfahrzeugen (FTF, automated guided vehicle - AGV).

Heutige fahrerlose Transportfahrzeuge (FTF) sind in der Regel flache, über mehrere angetriebene Radsätze gesteuerte Fahreinheiten. Diese tragen, halten und fördern entweder die Last direkt oder über ein geeignetes Lastaufnahmemittel. Bisher sind Fahrerlose Transportsysteme (FTS) bekannt, bei denen sich die fahrerlosen Transportfahrzeuge (FTF) auf einer meist ebenen Fläche gesteuert, geregelt oder frei navigierend bewegen. Der Durchsatz, die Förderleistung oder Sortierleistung eines solchen Systems wird durch mehrere Faktoren bestimmt und begrenzt:
- Größe (Flächenbedarf) und Geometrie (Kippen) des fahrerlosen Transportfahrzeugs
- Geschwindigkeit und Beschleunigungsfähigkeit des fahrerlosen Transportfahrzeugs
- Beweglichkeit (uni- oder omnidirektional) der fahrerlosen Transportfahrzeuge
- Anzahl der fahrerlosen Transportfahrzeuge je Flächeneinheit
- Lastaufnahme und Lastfixierung
- Fahrauftrag (Fahrwege, Speicherung, Transport, Sortierung, Sequenzierung, ...) und Anzahl der die Geschwindigkeit reduzierenden Kreuzungsevents.

Bei jedem Kreuzungsevent muss mindestens eines der fahrerlosen Transportfahrzeuge warten, was die Geschwindigkeit des fahrerlosen Transportsystems reduziert. Um das Problem der Flächenbelegung und der Kreuzungsevents (Stoppen-Warten-Anfahren) zu reduzieren, wird eine Mehrfachbelegung der fahrerlosen Transportfahrzeuge selbst realisiert, indem Lastaufnahmemittel in die Höhe gestapelt werden. Die notwendige Tragkraft, Leistung und Fahrweglänge des fahrerlosen Transportfahrzeugs erhöht sich hierbei mit den entsprechenden Folgen für Fahrzeit, Dynamik und Durchsatz. Darüber hinaus ist die Be- und Entladung weniger flexibel und manches gestapelte Lastaufnahmemittel legt unnötige Strecke zurück.

Der vorliegenden Erfindung liegt daher die Aufgabe zugrunde, Sortiersysteme effizienter zu gestalten. Diese Aufgabe wird durch die in den unabhängigen Ansprüchen beschriebenen Lösungen gelöst.

Die erfindungsgemäße Lösung sieht ein Sortiersystem zum Sortieren von Stückgütern von mindestens einer Entnahmestelle hin zu mindestens einer Abladestelle auf einer Bewegungsfläche vor. Das Sortiersystem umfasst ein Fördermittel erster Art, umfassend ein Fördermittelfahrwerk erster Art und einen auf diesem aufliegenden Fördermittellastträger. Das Sortiersystem umfasst ein Fördermittel zweiter Art, umfassend ein Fördermittelfahrwerk zweiter Art und einen auf diesem aufliegenden Fördermittellastträger. Die Fördermittelfahrwerke sind auf der Bewegungsfläche ansteuerbar entlang einer individuell festlegbaren Strecke verfahrbar. Der Fördermittellastträger des Fördermittels zweiter Art ist oberhalb des Fördermittellastträgers des Fördermittels erster Art anordenbar und die Fördermittel sind derart aneinander angepasst dimensioniert, dass das Fördermittel erster Art von dem Fördermittel zweiter Art überfahrbar und/oder dass das Fördermittel zweiter Art von dem Fördermittel erster Art unterfahrbar ist.

Unter einer Überfahrbarkeit des Fördermittels erster Art im Sinne der Erfindung soll insbesondere verstanden werden, dass sich das Fördermittel zweiter Art über das Fördermittel erster Art bewegt und teilweise bzw. komplett die gleiche Bewegungsfläche beansprucht. Während des Überfahrens kann das Fördermittel erster Art stillstehen oder sich bewegen. Beim Überfahren kann das Fördermittel zweiter Art komplett über das Fördermittel fahren - von einer ersten Seite hin und von einer zweiten Seite weg. Eine Unterfahrbarkeit des Fördermittels zweiter Art stellt analog das komplette darunter hindurch Unterfahren durch das Fördermittel erster Art - von einer ersten Seite hinein und von einer zweiten Seite hinaus. Während das erste Fördermittel in Bewegung ist, kann das zweite Fördermittel sich bewegen oder stillstehen. Währen des Über- bzw. Unterfahrens überstreichen die Fördermittel ganz oder zumindest teilweise die gleiche Fläche der Bewegungsfläche des Sortiersystems.

Die erfindungsgemäße Lösung ermöglicht eine Nutzung derselben Bewegungsfläche über mehrere Ebenen von mehreren Fördermitteln, ohne dass eine Ausbildung mehrerer übereinander liegender Trassen erforderlich ist. Durch die Über- bzw. Unterfahrbarkeit sind Kreuzungsevents somit nicht notwendigerweise mit Wartezeiten verbunden und die Kapazität und Geschwindigkeit des Sortiersystems wird erhöht.

Die Bewegungsfläche stellt die Fahrbahn der Fördermittel dar. Die Fördermittelfahrwerke liegen alle auf der Bewegungsfläche auf. Die Fördermittellastträger hingegen befinden sich auf der gleichen und/oder auf unterschiedlichen Ebenen. Das Fördermittelfahrwerk kann Antriebs-, Lenk- und/oder Stützräder des Fördermittels umfassen. Die Stückgüter werden auf unterschiedlichen Höhen transportiert, so dass auf der gleichen Bewegungsfläche bzw. Fahrbahn mehr als ein Fördermittel mit einer Last (Stückgut) gleichzeitig fahren kann. Das Problem der Flächenbelegung und der Kreuzungsevents wird reduziert durch die Nutzung der gleichen Bewegungsfläche durch mehrere Fördermittel über mehrere Ebenen. Die Stückgüter werden auf unterschiedlichen Höhen transportiert und die Fördermittel können sich gegenseitig über- bzw. unterfahren.

Je nach Ausgestaltung können sich die Fördermittel komplett über die gesamte Bewegungsfläche bewegen, oder aber spurgeführt von der Entnahmestelle hin zur Abladestelle entlang bestimmter Bereiche.

Die aneinander angepasste Dimensionierung kann erreicht werden, indem das Fördermittelfahrwerk des Fördermittels zweiter Klasse breiter und/oder länger ist als das Fördermittelfahrwerk des Fördermittels erster Klasse. Dadurch kann die Breitseite und/oder Längsseite des Fördermittels erster Art von dem Fördermittel zweiter Art entlang der Breit- und/oder Längsseite ausgerichtet unterfahren werden. Oder aber die Fördermittelfahrwerke weisen jeweils die gleiche, aber voneinander abweichende Länge und/oder Breite auf, so dass das Fördermittelfahrwerk erster Art mit seiner Breitseite unter die Längsseite des Fördermittelfahrwerks zweiter Art passt. Die Fördermittellastträger der Fördermittel erster und zweiter Art, im Folgenden auch als Fördermittellastträger erster und zweiter Art bezeichnet, können hierbei gleich oder voneinander abweichend ausgestaltet sein.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Um eine Nutzung derselben Bewegungsfläche über drei Ebenen zu ermöglichen, kann das Sortiersystem gemäß einer Ausführungsform zudem umfassen ein Fördermittel dritter Art, umfassend ein Fördermittelfahrwerk dritter Art und einen auf diesem aufliegenden Fördermittellastträger. Der Fördermittellastträger des Fördermittels dritter Art ist oberhalb des Fördermittellastträgers des Fördermittels zweiter Art anordenbar und die Fördermittel sind derart aneinander angepasst dimensioniert, dass das Fördermittel dritter Art von dem Fördermittel erster Art und/oder von dem Fördermittel zweiter Art unterfahrbar ist und/oder dass das Fördermittel erster Art und/oder das Fördermittel zweiter Art von dem Fördermittel dritter Art überfahrbar ist.

Gemäß einer weiteren Ausführungsform kann eines oder mehrere der Fördermittellastträger ein Abwurfmittel aufweisen, das ausgestaltet ist, ein Stückgut an der Abladestelle abzugeben. So kann das Stückgut automatisiert an jeder Abladestelle abgegeben werden, ohne dass ein externes Ablademittel herangezogen werden muss.

Gemäß einer weiteren Ausführungsform kann das Abwurfmittel ausgestaltet sein als Falltür oder Klappe einer Auflagefläche des Fördermittellastträgers für das Stückgut und/oder als Kippschale und/oder als Rollenbahn und/oder als Kugelrollen und/oder als Crossbelt und/oder als Längsbelt.

Gemäß einer weiteren Ausführungsform kann das Fördermittel zweiter Art eine permanente oder einstellbare Aufständerung aufweisen. Die Aufständerung wird vom Fördermittelfahrwerk umfasst und ist eine Aufständerung der tragenden Konstruktion des Fördermittels. Bei einer permanenten Aufständerung ist der Fördermittellastträger des Fördermittels zweiter Art stets oberhalb des Fördermittellastträgers des Fördermittels erster Art angeordnet. Bei einer einstellbaren Aufständerung kann diese im Bedarfsfall, beispielsweise vor einem Kreuzungsevent, eingerichtet werden. Ohne diesen Bedarfsfall können die Fördermittellastträger erster und zweiter Art auf gleicher Höhe angeordnet sein und erlauben somit einen bodennahen Transport. Durch die Aufständerung der Fördermittel, welche ein Über- und Unterfahren ermöglichen, kann auf einfache Weise ein Transport der Stückgüter auf unterschiedlichen Ebenen ermöglicht werden. Konstruktiv deutlich aufwändiger wären unterschiedliche Fahrbahnebenen und gleich hohe Fördermittel.

Gemäß einer weiteren Ausführungsform kann das Fördermittel ein fahrerloses Transportfahrzeug (FTF, automated guided vehicle - AGV) und das Sortiersystem ein fahrerloses Transportsystem (FTS) sein.

Gemäß einer weiteren Ausführungsform können die Fördermittel aktiv und/oder passiv verfahrbar ausgestaltet sein. Bei einer aktiven Verfahrbarkeit umfasst ein Fördermittel sein eigenes Antriebsmittel und eventuell zudem noch sein eigenes Versorgungssystem. Eine passive Verfahrbarkeit kann beispielsweise über Magneten in jedem Fördermittel und in bzw. unterhalb der Bewegungsfläche angeordneten Linearmotoren und Magneten realisiert werden.

Gemäß einer weiteren Ausführungsform kann das Sortiersystem zudem ein Steuerungssystem umfassen, das adaptiert ist, die individuell festlegbare Strecken der Fördermittel auszuwählen und zu koordinieren. Das Festlegen der Strecken kann anhand unterschiedlicher Kriterien erfolgen, um Kollisionen zu vermeiden, können die Fördermittel Sensoren umfassen.

Hinsichtlich eines Verfahrens wird die vorstehend genannte Aufgabe gelöst durch ein Verfahren zum Sortieren von Stückgütern auf einer Bewegungsfläche eines Sortiersystems, umfassend ein Fördermittel erster Art und ein Fördermittel zweiter Art umfassend die Verfahrensschritte:
a) Verfahren des Fördermittels erster Art auf der Bewegungsfläche entlang einer individuell festlegbaren ersten Strecke und/oder Verfahren des Fördermittels zweiter Art auf der Bewegungsfläche entlang einer individuell festlegbaren zweiten Strecke.
b) Überfahren des Fördermittels erster Art von dem Fördermittel zweiter Art und/oder Unterfahren des Fördermittels zweiter Art von dem Fördermittel erster Art.

Gemäß einer Ausführungsform kann das Fördermittel erster Art ein Fördermittelfahrwerk erster Art und einen auf diesem aufliegenden Fördermittellastträger aufweisen. Das Fördermittel zweiter Art kann ein Fördermittelfahrwerk zweiter Art und einen auf diesem aufliegenden Fördermittellastträger aufweisen. Der Fördermittellastträger zweiter Art kann oberhalb des Fördermittellastträgers erster Art anordenbar sein und die Fördermittel können derart aneinander angepasst dimensioniert sein, dass das Fördermittel erster Art von dem Fördermittel zweiter Art überfahrbar und/oder dass das Fördermittel zweiter Art von dem Fördermittel erster Art unterfahrbar ist.

Gemäß einer weiteren Ausführungsform kann ein Überfahren des Fördermittels erster und/oder zweiter Art von einem von dem Sortiersystem umfassten Fördermittel dritter Art und/oder Unterfahren des Fördermittels dritter Art von dem Fördermittel erster und/oder zweiter Art erfolgen. So kann die Effizienz noch weiter erhöht werden, da drei Ebenen oberhalb der Bewegungsfläche zugleich nutzbar sind. Ein Kreuzungsevent von drei Fördermitteln wird so ermöglicht.

Gemäß einer weiter Ausführungsform kann der Fördermittellastträger des Fördermittels dritter Art oberhalb des Fördermittellastträgers des Fördermittels zweiter Art anordenbar sein und die Fördermittel derart aneinander angepasst dimensioniert sein, dass das Fördermittel dritter Art von dem Fördermittel erster Art und/oder von dem Fördermittel zweiter Art unterfahrbar ist und/oder dass das Fördermittel erster Art und/oder das Fördermittel zweiter Art von dem Fördermittel dritter Art überfahrbar ist.

Um an der Abladestelle eine einfache Entfernung des Stückguts vom Fördermittel zu ermöglichen, kann gemäß einer Ausführungsform eine Abgabe eines Stückguts von einem der Fördermittellastträger an der Abladestelle seitlich oder nach oben oder nach unten durch einen Abwurfmechanismus erfolgen. Bei einer Abgabe nach unten kann der Abwurfmechanismus falltürartig ausgestaltet sein.

Um gemäß einer weiteren Ausführungsform einen Transport des Fördermittels zweiter und/oder dritter Klasse in variabler Höhe zu ermöglichen, kann eine Aufständerung des Fördermittels zweiter und/oder dritter Art erfolgen.

Gemäß einer weiteren Ausführungsform kann das Fördermittel ein aktiv und/oder passiv verfahrbar ausgestaltetes fahrerloses Transportfahrzeug (FTF, automated guided vehicle - AGV) und das Sortiersystem ein fahrerloses Transportsystem (FTS) sein.

Ausführungsformen der Erfindung werden nachfolgend anhand der Figuren beispielsweise näher erläutert. Dabei zeigen:
- Figur 1: nebeneinander angeordnete Fördermittel erster und zweiter Art;
- Figuren 2 - 5: übereinander angeordnete Fördermittel erster und zweiter Art mit gleichen oder voneinander abweichenden Fördermittellastträgern;
- Figuren 6a - 6e;: Schritt für Schritt das Transportieren und Entladen eines Stückguts mit dem erfindungsgemäßen Sortiersystem und Verfahren.

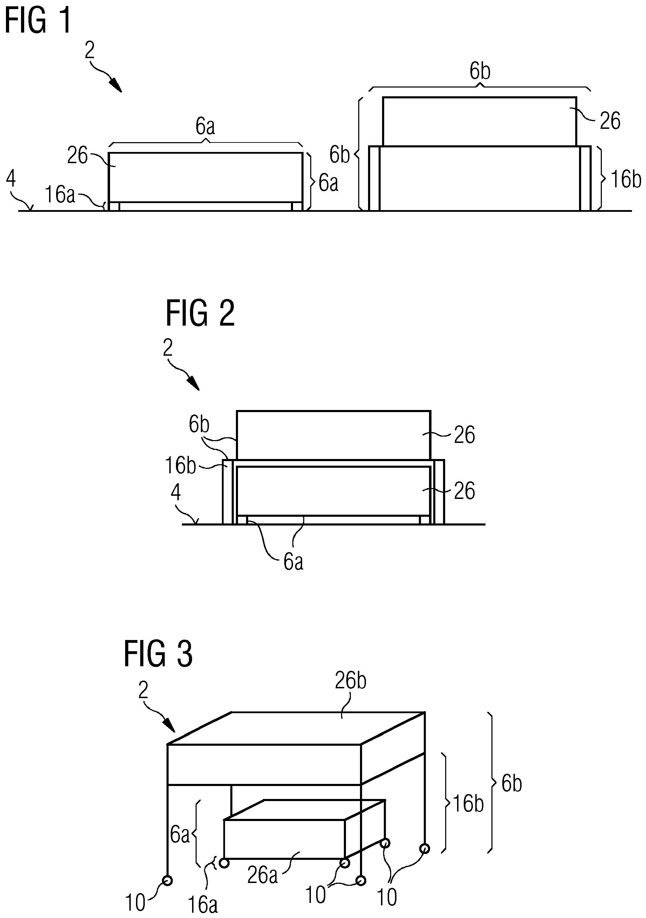

Figur 1 zeigt gemäß einer Ausführungsform der Erfindung schematisch ein Sortiersystem 2 zum Transportieren bzw. Sortieren von Stückgütern 1 von einer Entladestelle hin zu einer Abladestelle 4 mit nebeneinander angeordneten Fördermitteln erster Art 6a und zweiter Art 6b. Die Fördermittel 6a, 6b umfassen jeweils ein Fördermittelfahrwerk 16a, 16b und einen Fördermittellastträger 26 zur Aufnahme von Stückgut 1. Die Fördermittellastträger 26 können, müssen aber nicht unmittelbar auf den Fördermittelfahrwerken 16a, 16b aufliegen. Die Fahrwerke 16a, 16b stehen auf der Bewegungsfläche 4 und sind auf dieser entlang einer individuell bestimmbaren Strecke bewegbar.

Die Fördermittelfahrwerke 16a, 16b sind auf unterschiedliche Weise ausgestaltet hinsichtlich ihrer Dimensionierung, zwingend in ihrer maximalen Höhe - wobei das Fördermittelfahrwerk zweiter Art 16b höher als das Fördermittel erster Art 6a ist. Ihre Aufgabe ist es, die Bewegung der Fördermittel 6a, 6b zu ermöglichen. Die Aufgabe des Fördermittelfahrwerks zweiter Art 16b ist es zudem, den Fördermittellastträger 26 derart aufzuständern, dass er oberhalb des Fördermittellastträgers erster Art 26 anordenbar ist, so dass das Fördermittel erster Art 6a unterhalb vom Fördermittel zweiter Art 6b angeordnet werden kann, indem das Fördermittelfahrwerk erster Art 16a samt gesamtem Fördermittel 6a und/oder das Fördermittelfahrwerk zweiter Art 16b samt gesamten Fördermittel 6b bewegt wird. So kann auf einem Abschnitt der gleichen Bewegungsfläche 4 zugleich das Fördermittel erster und zweiter Art 6a, 6b fahren.

Die Fördermittellastträger 26 der Fördermittel erster und zweiter Art 6a, 6b sind in Figur 1, 2 und 4 hinsichtlich Größe, Form und Funktionalität im Wesentlichen gleichartig ausgestaltet. Dies trifft jedoch nicht für die Fördermittellastträger der Figuren 3, 4 und 6 zu. Die Fördermittelfahrwerke 16a, 16b hingegen unterscheiden sich in ihrer Größe und teilweise ihrer Form voneinander. Das Fördermittelfahrwerk zweiter Art 16b ist breiter als das gesamte Fördermittel erster Art 6a, so dass das Fördermittel erster Art 6a unter das Fördermittelfahrwerk zweiter Art 16b fahrbar ist und/oder so dass das Fördermittel zweiter Art 6b über das Fördermittel erster Art 6a fahrbar ist - das Fördermittel erster Art 6a ist also von dem Fördermittel zweiter Art 6b überfahrbar und/oder das Fördermittel zweiter Art 6b ist von dem Fördermittel erster Art 6a unterfahrbar.

Gemäß einer Ausführungsform sind die Fördermittel 6a, 6b als fahrerlose Transportfahrzeuge (FTF, automated guided vehicle - AGV) ausgestaltet, so dass das gesamte Sortiersystem ein fahrerloses Transportsystem (FTS) ist. Dieses kann modular aufgebaut werden, eine Aufständerung - permanent oder variabel - des Fördermittels zweiter Art 6b kann mit konstruktiv einfachen Mitteln erreicht werden. Ein vom Sortiersystem umfasstes Steuerungssystem kann einfach angepasst werden, um während eines Sortierverfahrens ein Über- bzw. Unterfahren der Fördermittel 6a, 6b, welches ein Kreuzungsevent darstellt, zuzulassen. Die Fördermittel 6a, 6b legen in Abhängigkeit von ihrem Sortierauftrag individuell festlegbare, von dem Steuerungssystem festlegbare Strecken von einer Entnahmestelle hin zu ihren (gleichen oder voneinander verschiedenen) Abladestellen 5 zurück.

Bei einer permanenten Aufständerung sind die Fördermittellastträger zweiter Art 16b stets oberhalb der Fördermittellastträger erster Art 16a angeordnet. Bei einer variablen Aufständerung sind die Fördermittellastträger zweiter Art 16b auf Höhe oder nur leicht oberhalb der Fördermittellastträger erster Art 16a angeordnet und nur für ein Über- bzw. Unterfahren wird der Fördermittellastträger zweiter Art 16b angehoben. Der Fördermittellastträger zweiter Art 16b ist bei einer variablen Aufständerung vertikal bewegbar. Dies kann beispielsweise durch teleskopartige Stützarme erzielt werden.

Figur 2 zeigt die Fördermittel 6a, 6b aus Figur 1 übereinander angeordnet gemäß einer weiteren Ausführungsform der Erfindung. Das Fördermittelfahrwerk 16b ist gerade ein wenig höher als das Fördermittel erster Art 6a samt Fördermittelfahrwerk 16a und Fördermittellastträger 26.

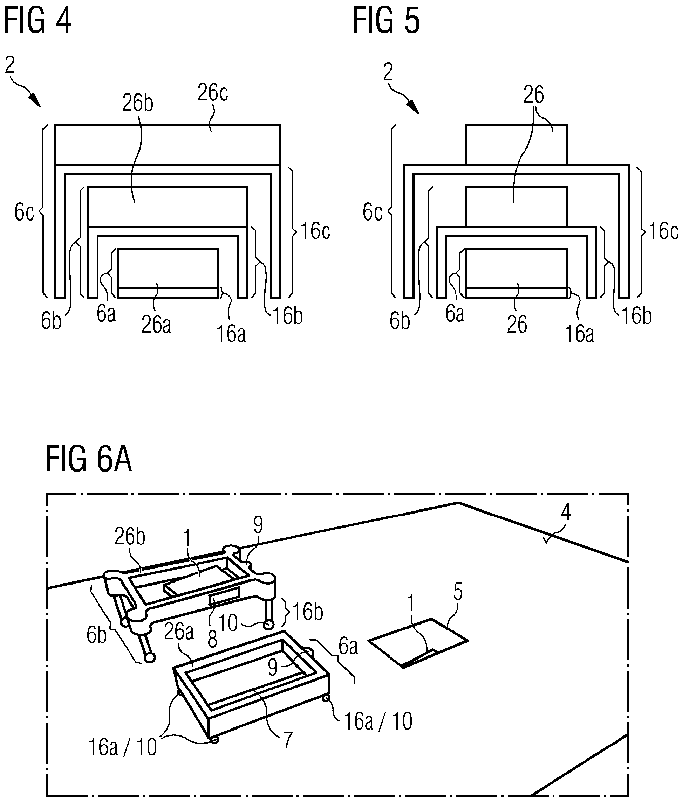

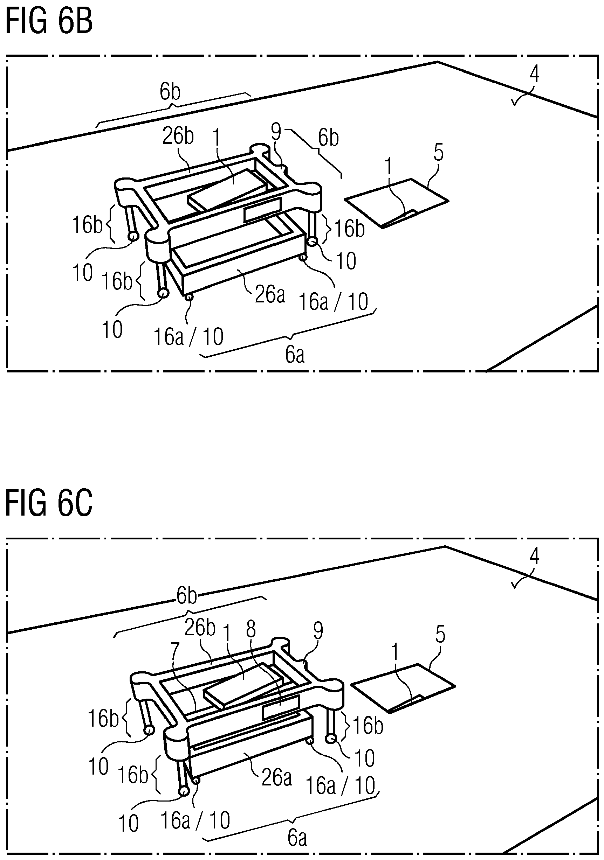

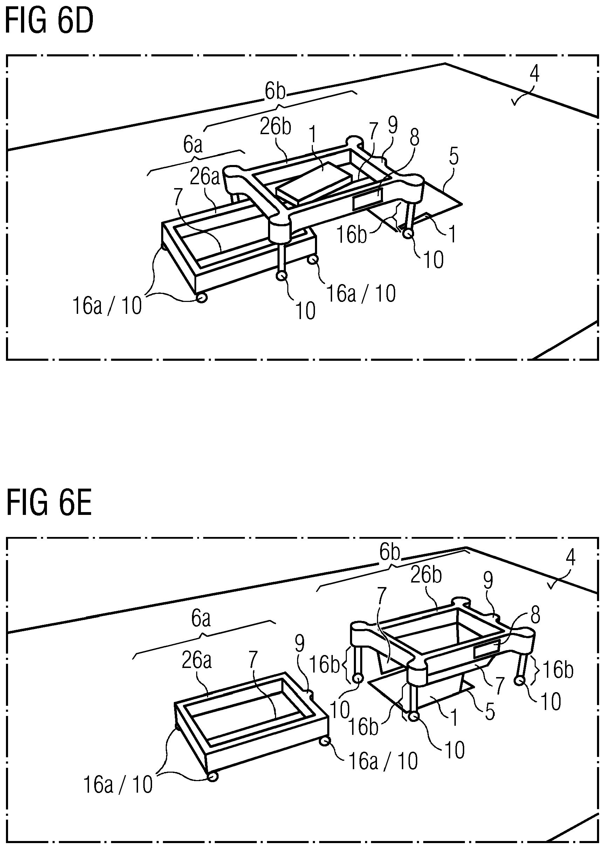

Figur 3 zeigt gemäß noch einer weiteren Ausführungsform der Erfindung übereinander angeordnete Fördermittel erster und zweiter Art 6a, 6b eines Sortiersystems 2, wobei das Fördermittel erster Art 6a sowohl längs, als auch quer unter das Fördermittel zweiter Art 6b passt. Die Fördermittelfahrwerke 16a, 16b weisen Transportrollen 10 auf. Das Fördermittelfahrwerk zweiter Art 16b ist stelzenartig aufgeständert in der Art eines Tisches mit einem Transportmittel, welches in Figur 6 als Transportrolle 10 ausgestaltet ist, so dass das Fördermittel erster Art 6a unter das Fördermittel zweiter Art 6b passt.

Die Sortiersysteme 2 der Figuren 1 - 3 transportieren Stückgüter 1 auf zwei Ebenen. Die Sortiersysteme der Figuren 4 - 5 transportieren Stückgüter 1 auf drei Ebenen.

Figur 4 zeigt ein Sortiersystem 2 mit übereinander angeordneten Fördermittel erster, zweiter und dritter Art 6a, 6b, 6c gemäß noch einer weiteren Ausführungsform der Erfindung. Der Fördermittellastträger dritter Art 26c ist breiter als der Fördermittellastträger zweiter Art 26b, welcher wiederum breiter als der Fördermittellastträger erster Art 26a ausgestaltet ist. Die Fördermittel 6a, 6b, 6c passen so baukastenartig untereinander und sind mit zunehmender Höhe ausladender ausgestaltet. Die Fördermittelfahrwerke 16a, 16b, 16c sind in ihrer Dimensionierung - Breite und Länge - an die Fördermittellastträger 26a, 26b, 26c angepasst. Die Fördermittelfahrwerke zweiter respektive dritter Art 16b, 16c bieten einen Hohlraum zum Unterfahren durch die Fördermittel erster respektive erster und/oder zweiter Art 6a, 6b bzw. können diese überfahren. Es ist gemäß einem weiteren Aspekt möglich, das Sortiersystem 2 über noch mehr Ebenen auszubilden durch Fördermittel vierter oder noch höherer Art.

Figur 5 zeigt ein weiteres Sortiersystem 2 gemäß noch einer weiteren Ausführungsform der Erfindung welches drei übereinander angeordnete Fördermittel erster, zweiter und dritter Art 6a, 6b, 6c aufweist. Die Fördermittelfahrwerke 16a, 16b, 16c sind in ihrer Dimensionierung gleichartig wie diejenigen aus Figur 4 ausgestaltet, allerdings liegen auf den Fördermittelfahrwerken 16a, 16b, 16c jeweils gleichartig (und nicht wie in Figur 4 unterschiedlich) dimensionierte und ausgestaltete Fördermittellastträger 26 auf. So können standardisierte Fördermittel 6 herangezogen werden, bei denen nur die Dimensionierung der Fördermittelfahrwerke 16a, 16b, 16c für das Über- bzw. Unterfahren angepasst werden muss.

Die Aufständerung der Fördermittel dritter Art 6c ist ebenfalls permanent oder einstellbar ausgestaltet.

Gemäß einem Aspekt werden die Fördermittel 6 samt Fördermittelfahrwerken 16 und Fördermittellastträgern 26 so konstruiert, dass der Abstand zwischen den Fördermitteln 6 so gering wie möglich ist, um den Platzbedarf soweit wie möglich zu reduzieren. Aus statischen Gründen wird jedoch dennoch - zumindest wenn die Länge und Breite des Fördermittellastträgers erster Art 6a nicht geringer ist als die Länge oder Breite des Fördermittels zweiter Art 6b - die Ausladung des Fördermittels zweiter Art 6b größer sein als die Ausladung des Fördermittels erster Art 6b. Wegen des zunehmenden Platzbedarfs werden die Fördermittel 6 so schmal gebaut, wie für die Art der Stückgüter 1 gerade noch sinnvoll ist.

Gemäß einem weiteren Aspekt werden die Fördermittelfahrwerke 16 und die Fördermittellastträger 16 aus sicherheitstechnischen Überlegungen so flach wie möglich über dem Boden angeordnet. Der vertikale Abstand zwischen dem beladenen Fördermittellastträger erster Art 26a und der Unterseite des Fördermittellastträgers zweiter Art 26b wird so gering wie möglich sein. Gleiches gilt für die Fördermittellastträger zweiter und dritter Art 26b, 26c.

Figuren 6a - 6e zeigen gemäß einer weiteren Ausführungsform einen Sortierprozess, bei welchem das von einer Entnahmestelle aufgenommene Stückgut 1 von einem Fördermittel zweiter Art 6b auf einem Fördermittellastträger zweiter Art 26b auf einer Ebene oberhalb des Fördermittels erster Art 6a hin zu seiner durch einen Sortierprozess bestimmten Abladestelle 5 transportiert wird. Beim Kreuzungsevent (Figuren 6b - 6d) überfährt das Fördermittel zweiter Art 6b das Fördermittel erster Art 6a. Die Fördermittellastträger 26 weisen ein falltürartiges Abwurfmittel 7 auf, durch welches das Stückgut 1 durch Öffnen der Falltür nach unten abgeworfen wird (Figur 6e). Die Abgabe nach unten ist platzsparend im Vergleich zu einer ebenfalls möglichen seitlichen Abgabe, beispielsweise über eine Transportrutsche oder einen Längs- oder Cross-Belt-Förderer. Durch die Aufständerung des Fördermittels zweiter Art 6a und die dadurch bedingte Fallhöhe eignet sich diese Art der Abgabe insbesondere für robuste Stückgüter wie Pakete, Päckchen, Gepäckstücke, .... Um eine hohe Fahrgeschwindigkeit zu erlauben, bei der auch bei Geschwindigkeitsänderungen keine Gefahr des Runterrutschens des Stückguts 1 besteht, kann der Fördermittellastträger wie in den Figuren 6a - 6e im Transportmodus 5-seitig geschlossen ausgestaltet sein. Dies ist jedoch nicht zwingend.

Während des Kreuzungsevents bewegen sich die zwei Fördermittel 6a, 6b rechtwinklig zueinander. Ansonsten können sie sich kartesisch und gemeinsam fahrend, aber auch völlig unabhängig voneinander fahrend bewegen.

Ein von dem Sortiersystem umfasstes Steuerungssystem agiert als Leitsteuerung und ist adaptiert, die individuell festlegbare Strecken der Fördermittel auszuwählen und zu koordinieren, bestimmt die Strecken, Kreuzungsevents und -orte. Die Fördermittel 6a, 6b weisen (Sicherheits-)Sensoren 9 zur Standortbestimmung und Lageerfassung und/oder zur Vermeidung von Kollision und/oder zur Streckenführung und/oder Batterien 8 zu ihrer eigenen Versorgung auf.

Gemäß einer weiteren Ausführungsform kann der Fördermittellastträger 26 fest mit dem Fördermittel 6 verbunden und somit vom Sortiersystem 2 fest umfasst sein, oder aber das zu sortierende Stückgut 1 selber sein. In diesem Fall wird der Fördermittellastträger 26 bzw. das Stückgut 1 an der Entnahmestelle von dem Fördermittelfahrwerk 16 unterfahren und von diesem aufgenommen, oder auf das Fördermittelfahrwerk 16 geladen. An der Abladestelle 5 erfolgt eine Trennung des Stückguts 1 und des Fördermittelfahrwerks 16. Die Fördermittellastträger 26 können Versorgungsgüter-Container (Essen, Medizin, Decken) im Krankenhausbereich sein, die hin zum Zielpatienten gefahren werden.

Gemäß einer weiteren Ausführungsform können ein oder mehrere Stückgüter 1 mit gleicher oder unterschiedlicher Abladestelle 5 von einem Fördermittel 6 transportiert werden.

Gemäß einer weiteren Ausführungsform sind die Fördermittel 6 als fahrerlose Transportfahrzeuge ausgestaltet. Durch die individuelle Festlegung der Strecke jedes Fördermittels können die Fördermittel 6 Sortieraufgaben wahrnehmen und ein Sortiersystem 2 ausbilden.

Die Fördermittel sind gemäß einer Ausführungsform individuell über Aktoren, beispielsweise Rollen und/oder Bänder, antreibbar ausgestaltet und somit entlang einer individuell bestimmbaren Strecke auf der gemeinsamen Bewegungsfläche 4 bewegbar.

Auch wenn in den oben beschriebenen Ausführungsformen stets nur ein Fördermittel derselben Art 6a, 6b, 6c auf der gleichen Bewegungsfläche 4 auftaucht, kann ein erfindungsgemäßes Sortiersystem 2 selbstverständlich auch mehr als ein Fördermittel derselben Art 6a, 6b, 6c aufweisen.

### Bezugszeichenliste

- 1: Stückgut
- 2: Sortiersystem
- 4: Bewegungsfläche
- 5: Abladestelle
- 6: Fördermittel
- 7: Abwurfmittel
- 8: Batterie
- 9: Sensor
- 10: Transportrollen
- 16: Fördermittelfahrwerk
- 26: Fördermittellastträger

## Patentansprüche

1. Sortiersystem (2) zum Sortieren von Stückgütern (1) von mindestens einer Entnahmestelle hin zu mindestens einer Abladestelle (5) auf einer Bewegungsfläche (4) umfassend
- ein Fördermittel erster Art (6a), umfassend ein Fördermittelfahrwerk erster Art (16a) und einen auf diesem aufliegenden Fördermittellastträger (26);
- ein Fördermittel zweiter Art (6b), umfassend ein Fördermittelfahrwerk zweiter Art (16b) und einen auf diesem aufliegenden Fördermittellastträger (26);
wobei
- die Fördermittelfahrwerke (16, 16a, 16b) auf der Bewegungsfläche (4) ansteuerbar entlang einer individuell festlegbaren Strecke verfahrbar sind;
- der Fördermittellastträger (26, 26b) des Fördermittels zweiter Art (6b) oberhalb des Fördermittellastträgers (26, 26a) des Fördermittels erster Art (6a) anordenbar ist und die Fördermittel (6a, 6b) derart aneinander angepasst dimensioniert sind, dass das Fördermittel erster Art (6a) von dem Fördermittel zweiter Art (6b) überfahrbar und/oder dass das Fördermittel zweiter Art (6b) von dem Fördermittel erster Art (6a) unterfahrbar ist.

2. Sortiersystem (2) nach Anspruch 1, zudem umfassend
ein Fördermittel dritter Art (6c), umfassend ein Fördermittelfahrwerk dritter Art (16c) und einen auf diesem aufliegenden Fördermittellastträger (26, 26c), wobei der Fördermittellastträger (26, 26c) des Fördermittels dritter Art (6c) oberhalb des Fördermittellastträgers (26, 26b) des Fördermittels zweiter Art (6b) anordenbar ist und die Fördermittel (6a, 6b, 6c) derart aneinander angepasst dimensioniert sind, dass das Fördermittel dritter Art (6c) von dem Fördermittel erster Art (6a) und/oder von dem Fördermittel zweiter Art (6b) unterfahrbar ist und/oder dass das Fördermittel erster Art (6a) und/oder das Fördermittel zweiter Art (6b) von dem Fördermittel dritter Art (6c) überfahrbar ist.

3. Sortiersystem (2) nach einem der vorangehenden Ansprüche, **dadurch gekennzeichnet, dass**
eines oder mehrere der Fördermittellastträger (26, 26a, 26b, 26c) ein Abwurfmittel (7) aufweisen, das ausgestaltet ist, ein Stückgut an der Abladestelle (5) abzugeben.

4. Sortiersystem (2) nach Anspruch 3, **dadurch gekennzeichnet, dass**
das Abwurfmittel (7) ausgestaltet ist als Falltür oder Klappe einer Auflagefläche des Fördermittellastträgers für das Stückgut und/oder als Kippschale und/oder als Rollenbahn und/oder als Kugelrollen und/oder als Crossbelt und/oder als Längsbelt.

5. Sortiersystem (2) nach einem der vorangehenden Ansprüche, **dadurch gekennzeichnet, dass**
das Fördermittel zweiter Art eine permanente oder einstellbare Aufständerung aufweist.

6. Sortiersystem (2) nach einem der vorangehenden Ansprüche, **dadurch gekennzeichnet, dass**
das Fördermittel ein fahrerloses Transportfahrzeug (FTF, AGV) und das Sortiersystem (2) ein fahrerloses Transportsystem (FTS) ist.

7. Sortiersystem (2) nach einem der vorangehenden Ansprüche, **dadurch gekennzeichnet, dass**
die Fördermittel aktiv und/oder passiv verfahrbar ausgestaltet sind.

8. Sortiersystem (2) nach einem der vorangehenden Ansprüche, zudem umfassend
ein Steuerungssystem, das adaptiert ist, die individuell festlegbare Strecken der Fördermittel auszuwählen und zu koordinieren.

9. Verfahren zum Sortieren von Stückgütern (1) auf einer Bewegungsfläche (4) eines Sortiersystems (2), umfassend ein Fördermittel erster Art (6a) und ein Fördermittel zweiter Art (6b) umfassend die Verfahrensschritte:
a) Verfahren des Fördermittels erster Art (6a) auf der Bewegungsfläche (4) entlang einer individuell festlegbaren ersten Strecke und/oder Verfahren des Fördermittels zweiter Art (6b) auf der Bewegungsfläche (4) entlang einer individuell festlegbaren zweiten Strecke;
b) Überfahren des Fördermittels erster Art (6a) von dem Fördermittel zweiter Art (6b) und/oder Unterfahren des Fördermittels zweiter Art (6b) von dem Fördermittel erster Art (6a) .

10. Verfahren nach Anspruch 9, **dadurch gekennzeichnet, dass**
- das Fördermittel erster Art (6a) ein Fördermittelfahrwerk erster Art (16a) und einen auf diesem aufliegenden Fördermittellastträger (26, 26a) aufweist;
- das Fördermittel zweiter Art (6b) ein Fördermittelfahrwerk zweiter Art (16b) und einen auf diesem aufliegenden Fördermittellastträger (26, 26b) aufweist; und
- das der Fördermittellastträger (26, 26b) des Fördermittels zweiter Art (6b) oberhalb des Fördermittellastträgers (26, 26a) des Fördermittels erster Art (6a) anordenbar ist und die Fördermittel (6a, 6b) derart aneinander angepasst dimensioniert sind, dass das Fördermittel erster Art (6a) von dem Fördermittel zweiter Art (6b) überfahrbar und/oder dass das Fördermittel zweiter Art (6b) von dem Fördermittel erster Art (6a) unterfahrbar ist.

11. Verfahren nach einem der Ansprüche 9 bis 10, zudem umfassend den Verfahrensschritt
Überfahren des Fördermittels erster und/oder zweiter Art (6a, 6b) von einem von dem Sortiersystem (2) umfassten Fördermittel dritter Art (6c) und/oder Unterfahren des Fördermittels dritter Art (6c) von dem Fördermittel erster und/oder zweiter Art (6a, 6b).

12. Verfahren nach Anspruch 11, **dadurch gekennzeichnet, dass** der Fördermittellastträger (26, 26c) des Fördermittels dritter Art (6c) oberhalb des Fördermittellastträgers (26, 26b) des Fördermittels zweiter Art (6b) anordenbar ist und die Fördermittel (6a, 6b, 6c) derart aneinander angepasst dimensioniert sind, dass das Fördermittel dritter Art (6c) von dem Fördermittel erster Art (6a) und/oder von dem Fördermittel zweiter Art (6b) unterfahrbar ist und/oder dass das Fördermittel erster Art (6a) und/oder das Fördermittel zweiter Art (6b) von dem Fördermittel dritter Art (6c) überfahrbar ist.

13. Verfahren nach einem der Ansprüche 9 bis 12, zudem umfassend den Verfahrensschritt
Abgabe eines Stückguts (1) von einem der Fördermittellastträger (26) an der Abladestelle (5) seitlich oder nach oben oder nach unten durch einen Abwurfmechanismus.

14. Verfahren nach einem der Ansprüche 9 bis 13, zudem umfassend den Verfahrensschritt
Aufständerung des Fördermittels zweiter und/oder dritter Art (6b, 6c) .

15. Verfahren einem der Ansprüche 9 bis 14, **dadurch gekennzeichnet, dass**
das Fördermittel (6) ein aktiv und/oder passiv verfahrbar ausgestaltetes fahrerloses Transportfahrzeug (FTF, AGV) und das Sortiersystem (2) ein fahrerloses Transportsystem (FTS) ist.
